(19) Europäisches Patentamt
European Patent Office
Office européen des brevets

(11) EP 3 226 042 B1

(12) # EUROPEAN PATENT SPECIFICATION

(45) Date of publication and mention of the grant of the patent:
**04.05.2022 Bulletin 2022/18**

(21) Application number: **17152279.0**

(22) Date of filing: **19.01.2017**

(51) International Patent Classification (IPC):
***G02B 5/18*** *(2006.01)* ***G02B 27/10*** *(2006.01)*
***G01B 11/24*** *(2006.01)*

(52) Cooperative Patent Classification (CPC):
**F21V 5/002; G01B 11/2513; G02B 1/002; G02B 5/1809; G02B 27/106; G02B 27/1093;**
G02B 2207/00

(54) **STRUCTURED LIGHT GENERATOR AND OBJECT RECOGNITION APPARATUS INCLUDING THE SAME**

STRUKTURIERTER LICHTGENERATOR UND OBJEKTERKENNUNGSVORRICHTUNG DAMIT

GÉNÉRATEUR DE LUMIÈRE STRUCTURÉE ET APPAREIL DE RECONNAISSANCE D’OBJETS LE COMPRENANT

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **30.03.2016 US 201662315267 P**
**31.08.2016 KR 20160112087**

(43) Date of publication of application:
**04.10.2017 Bulletin 2017/40**

(73) Proprietors:
- **Samsung Electronics Co., Ltd.**
  **Gyeonggi-do 16677 (KR)**
- **California Institute of Technology**
  **Pasadena, CA 91125 (US)**

(72) Inventors:
- **HAN, Seunghoon**
  **Gyeonggi-do 16678 (KR)**
- **NAQAVI, Ali**
  **Pasadena, CA 91125 (US)**
- **ATWATER, Harry**
  **Pasadena, CA 91125 (US)**

(74) Representative: **Elkington and Fife LLP**
**Prospect House**
**8 Pembroke Road**
**Sevenoaks, Kent TN13 1XR (GB)**

(56) References cited:
**EP-A1- 2 831 538 WO-A2-2015/054601**
**FR-A1- 3 007 148 US-A1- 2011 180 779**

- **Anonymous: "Electromagnetic metasurface - Wikipedia", Wikipedia, 12 March 2017 (2017-03-12), XP055395329, Retrieved from the Internet: URL:https://en.wikipedia.org/wiki/Electromagnetic_metasurface [retrieved on 2017-08-02]**
- **JINWEI ZENG ET AL: "Manipulating Complex Light with Metamaterials", SCIENTIFIC REPORTS, vol. 3, no. 1, 2 October 2013 (2013-10-02) , XP055394391, DOI: 10.1038/srep02826**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 3 226 042 B1

## Description

### FIELD OF THE INVENTION

The invention relates to 3D object recognition apparatuses for sensing a shape or a motion of a three-dimensional (3D) object by using structured light generators.

### BACKGROUND OF THE INVENTION

Recently, in order to recognize objects such as people or other things, accurately identifying the shape, location, motion, or the like of an object by using precise three-dimensional (3D) shape recognition has been emphasized. As one method in this regard, 3D sensing technology using structured light (a structured light system) has been developed, and thus, precise motion recognition has become possible.

In comparison with previously used light systems, such a structured light system is required to have a smaller size and higher resolution when combined with various electronic devices. In order to generate structured light, an optical component such as a diffractive optical element (DOE) is commonly used, and the volume of such an optical component is a factor that influences the precision degree of design and manufacturing requirements.

Jinwei Zeng et al: "Manipulating Complex Light with Metamaterials", SCIENTIFIC REPORTS, vol. 3, no. 1, 2 October 2013 (2013-10-02), XP055394391 discloses a few-mode optical fibre with a concentric ring pattern comprising the rings as nanostructures with submicron dimensions less than the wavelength of light emitted into the fibre from a light source, to form a light distribution that is radiated as structured light.

US2011/180779 discloses nanostructured thin films that are stacked in two stacks on either side of a light-emitting active layer, one stack reflecting light and the other emitting structured light with angular directivity.

FR 3007148A discloses a guided mode resonance filter comprising a waveguide sandwiched between one-dimensional gratings having the same slit structure with sub-micron dimensions, for emitting a diffraction pattern.

EP 2831538 discloses a 3D imaging system in which structured light projected onto an object is sensed and processed to determine range parameters. The projector has a mask over laser sources, to generate the pattern for the structured light.

WO 2015/054601 discloses microwave imaging of moving objects, in which illumination field patterns are transmitted to a region of interest.

### SUMMARY OF THE INVENTION

The invention is defined by the claims.

Exemplary embodiments disclosed herein provide three-dimensional (3D) object recognition apparatuses including structured light generators.

Additional aspects will be set forth in part in the description which follows and, in part, will be apparent from the description, or may be learned by practice of the presented exemplary embodiments.

The nanostructures of the first meta optical device may have forms that are configured to realize a predetermined transmission intensity distribution and transmission phase distribution with respect to the emitted light incident thereon.

The light source may include a light exit surface through which the emitted light exits; and the first meta optical device may have a monolithic structure and may be provided directly on the light exit surface of the light source.

The nanostructures of the first meta optical device may have shapes and an arrangement that are determined such that a transmission intensity distribution and transmission phase distribution with respect to the emitted light incident thereon are repeated.

The nanostructures of the first meta optical device may have the shapes and distribution such that two transmission phase modulation values are obtained.

The two transmission phase modulation values may be 0 and $\pi$.

A distance from the light source to the first metasurface may be determined such that a contrast of a structured light pattern formed by the distribution of the light rays is a maximum.

The distance (d) from the light source to the first metasurface may satisfy the following condition:

$$d = m\frac{2a_1^{\,2}}{\lambda},$$

wherein $\lambda$ denotes the wavelength of the light emitted from the light source, $a_1$ denotes a period at which a same structure

is repeated in the first meta optical device, and m denotes a natural number.

The structured light generator may further include a second meta optical device provided between the light source and the first meta optical device, and the second meta optical device may include a second metasurface configured to adjust a beam shape of the light emitted from the light source.

The first meta optical device and the second meta optical device may share a supporting substrate supporting the first metasurface and the second metasurface, and the first metasurface and the second metasurface may be respectively provided on different surfaces of the supporting substrate, the different surfaces facing each other.

The structured light generator may further include a third meta optical device comprising a third meta surface configured to repeatedly form the distribution of the light rays formed by the first meta optical device in a predetermined angular space.

The first meta optical device and the third meta optical device may share a substrate supporting the first metasurface and the third metasurface, and the first metasurface and the third metasurface may be respectively provided on opposite surfaces of the substrate, the opposite surfaces facing each other.

The nanostructures may have cylindrical shapes or polygonal prismatic shapes.

The nanostructures may have asymmetric shapes.

The first meta optical device may further include a substrate supporting the nanostructures.

The nanostructures may include a dielectric material having a refractive index greater than a refractive index of the substrate.

The nanostructures may include a conductive material.

Some nanostructures among the nanostructures may include a dielectric material having a refractive index greater than a refractive index of the substrate, and other nanostructures among the nanostructures may include a conductive material.

BRIEF DESCRIPTION OF THE DRAWINGS

These and/or other aspects will become apparent and more readily appreciated from the following description of the exemplary embodiments, taken in conjunction with the accompanying drawings in which:

FIG. 1 is a conceptual diagram of structured light formed by a metasurface used in a structured light generator;
FIG. 2 is a conceptual diagram illustrating examples of an optical function that may be performed by a metasurface used in a structured light generator;
FIG. 3 is a conceptual diagram illustrating an example of a form of a beam incident on each metasurface in FIG. 2;
FIG. 4 is a schematic cross-sectional view of a structure of a structured light generator;
FIG. 5 is a perspective view of an example structure of a metasurface used in the structured light generator of FIG. 4;
FIG. 6 is a graph showing an example of a phase change distribution caused by the metasurface of the structured light generator of FIG. 4;
FIG. 7 is a graph showing distribution of rays of light, that is, a structured light pattern, formed by a structured light generator having the phase change distribution of FIG. 6 as an intensity distribution in angular space;
FIG. 8 is a graph showing contrast of the structured light pattern of FIG. 7 according to a distance between a light exit surface and a metasurface in the structured light generator of FIG. 4;
FIG. 9 shows an example of distribution of rays of light, that is, a structured light pattern, formed by the structured light generator of FIG. 4;
FIG. 10 is a schematic cross-sectional view of a structure of a structured light generator;
FIG. 11 is a schematic cross-sectional view of a structure of a structured light generator;
FIG. 12 is a schematic cross-sectional view of a structure of a structured light generator;
FIG. 13 is a schematic cross-sectional view of a structure of a structured light generator;
FIG. 14 is a schematic cross-sectional view of a structure of a structured light generator;
FIG. 15 conceptually shows that incident beams from respective light sources are self-imaged in different forms by the structured light generator of FIG. 14 to form complex structured light; and
FIG. 16 is a schematic block diagram of a structure of a three-dimensional (3D) object recognition apparatus according to an exemplary embodiment.

DETAILED DESCRIPTION

Reference will now be made in detail to exemplary embodiments, examples of which are illustrated in the accompanying drawings. Like reference numerals in the drawings refer to like elements throughout, and sizes of elements in the drawings may be exaggerated for clarity and convenience of description. The present exemplary embodiments may have different forms and should not be construed as being limited to the descriptions set forth herein. Accordingly,

the exemplary embodiments are merely described below, by referring to the figures, to explain aspects.

Hereinafter, it will be understood that when an element or layer is referred to as being "formed on" another element or layer, the element or layer can be in contact with and directly formed on or in non-contact with and indirectly formed on the other element or layer.

As used herein, the singular forms "a," "an," and "the" are intended to include the plural forms as well, unless the context clearly indicates otherwise. It will be further understood that the terms "comprises," "comprising," "includes," and/or "including," when used herein, specify the presence of other elements but do not preclude the presence or addition of other elements unless specifically stated.

In addition, the terms such as "-or" and "-er" refer to a unit for performing at least one function or operation, and the unit may be implemented with hardware or software or a combination of hardware and software.

FIG. 1 is a conceptual diagram of structured light SL formed by a metasurface MS used in a structured light generator.

The metasurface MS may form a distribution of light rays from light emitted from a light source LS. The light source LS may be a point light source such as a laser diode. With respect to an incident beam formed by the light source LS, the metasurface MS may form a distribution of light rays that proceed spatially. That is, light that is emitted from the light source LS and forms one beam spot 10 is split into a plurality of light rays by the metasurface MS, and each plurality of light rays forms beam spot images 12 over a predetermined angular space. The beam spot images 12 have various distributions determined by detailed conditions of the metasurface MS, and are referred to as the structured light SL.

FIG. 2 is a conceptual diagram illustrating examples of an optical function that may be performed by a metasurface used in a structured light generator, and FIG. 3 is a conceptual diagram illustrating an example of the form of a beam incident on each metasurface in FIG. 2.

The metasurface may be realized as a beam shaper BS configured to shape a beam of incident light, a pattern generator PG configured to generate the incident light in a predetermined beam pattern, a duplicator DP configured to duplicate a pattern formed by the pattern generator PG, a combination thereof, and the like.

The beam shaper BS may adjust a divergence angle, a beam section form, a size, or the like of light $L_1$ emitted from the light source LS. A beam $L_2$ shaped by the beam shaper BS is incident on the pattern generator PG and then is emitted as structured light SL' in a predetermined pattern to be incident on the duplicator DP. The duplicator DP may duplicate the structured light SL' formed by the pattern generator PG and thus may form the final structured light SL.

In FIGS. 2 and 3, the function that may be performed by the metasurface is illustrated in order of the beam shaper BS, the pattern generator PG, and the duplicator DP, but exemplary embodiments are not limited thereto. In order to form structured light, one or more of the beam shaper BS, the pattern generator PG, and the duplicator DP may be used, and the arrangement order may also be changed.

Various examples of a structured light generator using a metasurface will now be described.

FIG. 4 is a schematic cross-sectional view of a structure of a structured light generator 100 , and FIG. 5 is a perspective view of an example structure of a first meta optical device 120 used in the structured light generator 100 of FIG. 4.

The structured light generator 120 includes a light source 110 and a first meta optical device 120 forming a distribution of light rays from light from the light source 110.

The light source 110 may be a laser light source and may include an emission layer and a plurality of reflective layers with the emission layer therebetween.

The first meta optical device 120 includes a first metasurface MS1 including a plurality of nanostructures NS having sub-wavelength dimensions less than a wavelength $\lambda$ of light emitted from the light source 110. A height H of a nanostructure NS is less than the wavelength $\lambda$ of light emitted from the light source 110. Also, an arrangement distance P between the plurality of nanostructures NS is less than the wavelength $\lambda$. In FIG. 5, the nanostructure NS is illustrated as having a cylindrical shape, but is not limited thereto. The nanostructure NS may have a column shape having various cross-section shapes such as a polygonal shape, a cross shape, a star shape, an asymmetric shape, etc. Alternatively, the nanostructure NS may have an asymmetric shape.

Also, the first meta optical device 120 may further include a substrate SU1 supporting the nanostructures NS constituting the first metasurface MS1.

The substrate SU1 may include a dielectric material. For example, a polymer material, such as polycarbonate (PC), polystyrene (PS), or polymethyl methacrylate (PMMA), $SiO_2$, or the like may be used to form the substrate SU1.

The nanostructure NS may include a dielectric material, and may include a material having a refractive index greater than a refractive index of the substrate SU1. For example, one of single crystal silicon, polysilicon, amorphous silicon, $Si_3N_4$, GaP, $TiO_2$, AlSb, AlAs, AlGaAs, AlGaInP, BP, and $ZnGeP_2$ may be used to form the nanostructure NS.

Alternatively, the nanostructures NS may include a conductive material. The conductive material may be a highly conductive metal material where surface plasmon excitation may arise. For example, the nanostructures NS may include at least one selected from copper (Cu), aluminum (Al), nickel (Ni), ferrum (Fe), cobalt (Co), zinc (Zn), titanium (Ti), ruthenium (Ru), rhodium (Rh), palladium (Pd), platinum (Pt), silver (Ag), osmium (Os), iridium (Ir), and gold (Au),

and may include an alloy including one of those materials. In some exemplary embodiments, the nanostructures NS may include a two-dimensional material having good conductivity, such as graphene, or conductive oxide.

Alternatively, some of the nanostructures NS may include a dielectric material having a high refractive index, and other nanostructures NS may include a conductive material. That is, some of the nanostructures NS may include a dielectric material having a refractive index greater than a refractive index of the substrate SU1, and other nanostructures NS may include a conductive material.

The nanostructures NS may each have transmission intensity and transmission phases according to respective materials and shapes. Shapes of the nanostructures NS may be adjusted to adjust a phase or intensity distribution of light passing through the first metasurface MS1. In FIG. 5, all of the nanostructures NS illustrated have the same shape, size, and height. However, this illustration is just an example, and the exemplary embodiments are not limited thereto. For example, a horizontal or vertical size or a composition material of individual nanostructures NS may be adjusted according to a location of the nanostructures NS to obtain a desired transmission intensity distribution or transmission phase distribution. In order to obtain the desired transmission intensity distribution or transmission phase distribution, a shape distribution of the nanostructures NS at each location may be determined with respect to a predetermined group including the nanostructures NS. Also, a group of the nanostructures NS formed as such may be repeatedly arranged with a predetermined period T. For example, FIG. 5 illustrates one group of the nanostructures NS, and the first metasurface MS1 may include the illustrated group of the nanostructures NS that is repeatedly arranged.

The first metasurface MS1 may have shapes and arrangement of the nanostructures NS determined to function as a pattern generator for light emitted from the light source 110.

The first meta optical device 120 may be configured to have a monolithic structure directly on a light exit surface 110a of the light source 110. When the first metasurface MS1 includes a group of the nanostructures NS repeatedly arranged with the predetermined period T, a distance d between the first metasurface MS1 and the light exit surface 110a may be determined so that a contrast ratio of structured light generated by the structured light generator 100, that is, contrast, may be maximum, and a thickness of the substrate SU1 may be determined according to the determined distance d. The distance d may be calculated using the following equation (1):

$$d = m\frac{2{a_1}^2}{\lambda} \qquad \text{Equation (1)}$$

In Equation (1), $\lambda$ denotes a wavelength of light emitted from the light source 110, $a_1$ denotes a period at which the same structure is repeated in the first meta optical device 120, and m denotes a natural number. That is, $a_1$ is the period T with which the group of the nanostructures NS having the predetermined shape distribution illustrated in FIG. 5 is repeatedly arranged.

The distance d denotes a condition where the contrast is maximum, and a distance between the first metasurface MS1 and the light exit surface 110a is not limited thereto. For example, the distance d may be determined by taking into account high contrast, complexity of a structured light pattern, and the like.

A volume of the structured light generator 100 may be greatly decreased due to the monolithically formed first meta optical device 120 being directly provided on the light exit surface 110a of the light source 110. The first metasurface MS1 may be very thin having a thickness of several microns or less, and accordingly, a thickness of the first meta optical device 120 may be greatly decreased to tens of microns or less. As the whole volume of the structured light generator 100 greatly decreases, limitations on manufacturing, for example, limitations on use in other electronic devices, may decrease, thereby enhancing price competitiveness and broadening application ranges.

The first metasurface MS1 used in the structured light generator 100 according to the present exemplary embodiment may have shapes and an arrangement of the nanostructures NS determined to serve as a pattern generator. For example, shapes and an arrangement of the nanostructures NS may be determined so that two phase modulation values with respect to incident light may be repeatedly shown. For example, the first metasurface MS1 may have two phase modulation values of 0 and $\pi$.

FIG. 6 is a graph showing an example of a transmission phase change distribution caused by the first metasurface MS1 of the structured light generator 100 of FIG. 4.

The letter X marked on a horizontal axis of the graph denotes a one-dimensional direction in which the nanostructures NS are arranged. Referring to the graph, a pulse train in which the transmission phases of 0 and $\pi$ repeatedly occur during a period of 0.5 um is shown, and a duty cycle of the pulse train is 0.5. The form of transmission phase distribution implemented is an example, and shapes, arrangement, and materials of the nanostructures NS may be variously modified to form a desired structured light pattern.

FIG. 7 is a graph showing a distribution of light rays, that is, a structured light pattern, formed by a structured light generator having the transmission phase distribution of FIG. 6 as an intensity distribution in angular space.

Referring to FIG. 7, the intensity distribution is not uniform at each angular location. However, design factors of the first metasurface MS1 may be adjusted to make the intensity distribution at each angular location uniform.

FIG. 8 is a graph showing a contrast of the structured light pattern of FIG. 7 according to a distance between the light exit surface 110a and the first metasurface MS1 in the structured light generator 100 of FIG. 4.

Referring to FIG. 8, a change in contrast from a minimum value to a maximum value is repeatedly shown. It may be seen that the maximum value of the contrast repeatedly occurs when the distance d is an integer multiple of a predetermined value. The distance between the light exit surface 110a and the first metasurface MS1 may be determined by taking the graph of FIG. 8 into account.

FIG. 9 shows an example of a distribution of light rays, that is, a structured light pattern, formed by the structured light generator 100 of FIG. 4.

Bright spots are rays of light formed over angular space by the first metasurface MS1 from incident light emitted from a light source. Such structured light may be used to analyze a motion of an object, a three-dimensional shape, or the like by comparing a change of pattern of the structured light that occurs when being irradiated on and reflected by the object. In this respect, as contrast indicating a difference between a bright spot and a dark portion increases, such an analysis may become easier. Also, a uniform intensity distribution over angular space may make the analysis easier.

FIG. 10 is a schematic cross-sectional view of a structure of a structured light generator 101.

The structured light generator 101 includes the light source 110, a second meta optical device 123 on the light exit surface 110a of the light source 110, and a first meta optical device 121 on the second meta optical device 123.

The first meta optical device 121 includes the substrate SU1 and the first metasurface MS1, and the second meta optical device 123 includes a substrate SU2 and a second metasurface MS2.

The second metasurface MS2 is designed to serve as a beam shaper shaping light from the light source 110. That is, the second metasurface MS2 adjusts a divergence angle of light emitted from the light source 110 to be incident on the first metasurface MS1. The first metasurface MS1 serves as a pattern generator forming distribution of rays of light from incident light having a divergence angle and an incident beam form adjusted by the second metasurface MS2.

The first metasurface MS1 and the second metasurface MS2 each include a plurality of nanostructures having sub wavelength dimensions, wherein shapes and arrangement of the plurality of nanostructures are designed according to each of the above functions.

FIG. 11 is a schematic cross-sectional view of a structure of a structured light generator 102.

The structured light generator 102 includes the light source 110, and a meta optical device 125 on the light exit surface 110a of the light source 110. The structured light generator 102 is modified from the structured light generator 101 of FIG. 10 in that, according to the structured light generator 102, the substrate SU1 is shared by and supports the first metasurface MS1 and the second metasurface MS2. That is, the meta optical device 125 has the first metasurface MS1 and the second metasurface MS2 respectively on both surfaces of the substrate SU1. The second metasurface MS2 serves as a beam shaper and directly contacts the light exit surface 110a. The first metasurface MS1 forms distribution of rays of light from incident light having a divergence angle and an incident beam form adjusted by the second metasurface MS2.

FIG. 12 is a schematic cross-sectional view of a structure of a structured light generator 103.

The structured light generator 103 includes the light source 110, a first meta optical device 131 and a third meta optical device 135, on the light exit surface 110a of the light source 110.

The first meta optical device 131 includes the substrate SU1 and the first metasurface MS1, and the third meta optical device 135 includes a substrate SU3 and a third metasurface MS3.

The first metasurface MS1 serves as a pattern generator forming distribution of rays of light from light emitted from the light source 110, and the third metasurface MS3 may be designed to serve as a duplicator duplicating the distribution of rays of light formed by the first metasurface MS1.

The first metasurface MS1 and the third metasurface MS3 each include a plurality of nanostructures having sub wavelength dimensions, wherein shapes and an arrangement of the plurality of nanostructures are designed according to each of the above functions.

FIG. 13 is a schematic cross-sectional view of a structure of a structured light generator 104.

The structured light generator 104 includes the light source 110, and a meta optical device 137 on the light exit surface 110a of the light source 110. The structured light generator 104 is modified from the structured light generator 103 of FIG. 12 in that, according to the structured light generator 104, the substrate SU3 is shared by and supports the first metasurface MS1 and the third metasurface MS3. That is, the meta optical device 137 has the first metasurface MS1 and the third metasurface MS3 respectively on both surfaces of the substrate SU3. The first metasurface MS1 and the third metasurface MS3 are designed to serve as a pattern generator and a duplicator, respectively.

The structured light generator 104 is different from the structured light generator 103 of FIG. 12 in that the first metasurface MS1 and the third metasurface MS3 are on both surfaces of one substrate SU3. Also, the substrate SU1 having a thickness which may satisfy a condition of a distance between the light exit surface 110a and the first metasurface MS1 is provided between the light source 110 and the meta optical device 137.

Examples of a structured light generator including two metasurfaces have been described thus far. Although examples in which the two metasurfaces are designed to serve as a beam shaper and a pattern generator, respectively, or serve as a pattern generator and a duplicator, respectively, have been described, examples of the two metasurfaces are not limited thereto.

In addition, more than two metasurfaces may be used. For example, a structured light generator including three metasurfaces serving as a beam shaper, a pattern generator, and a duplicator, respectively, may be implemented.

FIG. 14 is a schematic cross-sectional view of a structure of a structured light generator 105, and FIG. 15 conceptually shows incident beams of a plurality of light sources being self-imaged by the structured light generator 105 of FIG. 14 to form structured light.

The structured light generator 105 includes a light source array 115, and a meta optical device 140 on the light source array 115.

The light source array 115 includes a plurality of light sources 115a to 115d. For example, the light source array 115 may be a vertical-cavity surface-emitting laser (VCSEL) array.

The meta optical device 140 includes a first metasurface array 146 and a second metasurface array 142. The first metasurface array 146 and the second metasurface array 142 may be respectively located on both surfaces of a substrate SU. A thickness d of the substrate SU may be determined to satisfy requirements for a distance between the first metasurface array 146 and the second metasurface array 142.

The meta optical device 140 may be integrated on the light source array 115.

The second metasurface array 142 includes a plurality of second metasurfaces 142a, 142b, 142c, and 142d respectively facing the plurality of light sources 115a, 115b, 115c, and 115d. The plurality of second metasurfaces 142a to 142d may serve as beam shapers shaping light emitted from the light sources 115a to 115d, respectively.

The first metasurface array 146 includes a plurality of first metasurfaces 146a, 146b, 146c, and 146d forming distribution of rays of light from respective beams shaped by the second metasurfaces 142a to 142d.

Although all of the plurality of first metasurfaces 146a to 146d serve as pattern generators, patterns of structured lights $SL_a$ to $SL_d$ respectively generated by the first metasurfaces 146a to 146d may be different from each other. That is, the first metasurfaces 146a to 146d form image beams 12 to which an incident beam 10 emitted from each light source 115a to 115d is self-imaged, but form respectively unique patterns so that how the image beams 12 are distributed over space may be different from each other. To achieve this feature, the first metasurfaces 146a to 146d may each include a plurality of nanostructures having sub wavelength dimensions, but respective periods $T_a$, $T_b$, $T_c$, and $T_d$ of repeatedly arranging the same structure may be different from each other.

The structured light generator 105 is for generating complex and sophisticated structured light. The first metasurfaces 146a to 146d generating structured light having different patterns from each other may be disposed to correspond to the light sources 115a to 115d, respectively, so that various patterns of the structured light $SL_a$, $SL_b$, $SL_c$, and $SL_d$ may be generated, and final structured light SL which is more complex and sophisticated may be formed due to overlapping of the generated patterns of the structured light $SL_a$ to $SL_d$.

Although an example of the structured light generator 105 in which the second metasurface array 142 serving as a beam shaper and the first metasurface array 146 serving as a pattern generator are provided on the light source array 115 is shown, the structured light generator 105 is not limited thereto. The structured light generator 105 may be modified to include a metasurface array serving as a pattern generator and a metasurface array serving as a duplicator.

FIG. 16 is a schematic block diagram of a structure of a three-dimensional (3D) object recognition apparatus 1000 according to an exemplary embodiment.

The 3D object recognition apparatus 1000 includes a structured light generator 1200 which radiates structured light $SL_i$ of a predetermined pattern toward an object OBJ, a sensor 1400 which receives the structured light $SL_r$ reflected from the object OBJ, and a processor 1600 which analyzes depth information, a shape, or a motion of the object OBJ having a 3D shape by comparing pattern changes in the structured light $SL_i$ radiated by the structured light generator 1200 and the structured light $SL_r$ received by the sensor 1400.

The structured light generator 1200 may include a light source and at least one metasurface and may take the form of one of the structured light generators 100 to 105 according to the previous examples or a combination thereof.

The sensor 1400 senses the structured light $SL_r$ reflected by the object OBJ.

The processor 1600 may compare the structured light $SL_i$ radiated on the object OBJ and the structured light $SL_r$ reflected from the object OBJ with each other to analyze a 3D shape, a location, a motion, etc. of the object OBJ. The structured light $SL_i$ generated by the structured light generator 1200 is a pattern in which bright and dark spots are mathematically coded to uniquely designate respective angle direction location coordinates. When such a pattern is hit upon a 3D object and is reflected, a pattern of the reflected structured light $SL_r$ takes a changed form of the pattern of the radiated structured light $SL_i$. 3D information of the object OBJ may be extracted by comparing those patterns with each other and tracking a pattern for each coordinate.

The 3D object recognition apparatus 1000 may further include a controller which controls an operation of driving the light source in the structured light generator 1200, an operation of the sensor 1600, or the overall operations of the

entire 3D object recognition apparatus 1000. In addition, the 3D object recognition apparatus 1000 may further include a memory, etc., which stores an operation program for 3D information extraction to be performed in the processor 1600.

An operation result of the processor 1600, that is, information regarding a shape and a location of the object OBJ, may be transmitted to another unit. For example, the information may be transmitted to a controller of an electronic device in which the 3D object recognition apparatus 1000 is used.

The 3D object recognition apparatus 1000 may be used as a sensor which precisely obtains 3D information regarding an object (e.g., an object in front of the 3D object recognition apparatus 1000) and thus may be used in various electronic devices. For example, such an electronic device may be an autonomous driving device such as a driverless car, an autonomous vehicle, a robot, or a drone, an augmented reality device, a mobile communication device, or an Internet of Things (IoT) device.

The structured light generator according to one or more of the above examples may form a distribution of rays of light (structured light) from light emitted by a light source by using a metasurface including nanostructures of a sub wavelength.

The structured light generator according to one or more of the above examples uses a structure in which a meta optical device is integrated on a light source, and thus, is easy to miniaturize.

The structured light generator according to one or more of the above examples may use one or more metasurfaces and adjust a distance between a light source and a metasurface, and transmission phase distribution and transmission intensity distribution of the metasurface, to generate structured light having a high contrast ratio.

The structured light generator according to one or more of the above examples may be used in a 3D object recognition apparatus configured to sense a precise motion and 3D shape of an object.

It should be understood that the exemplary embodiments described herein should be considered in a descriptive sense only and not for purposes of limitation. Descriptions of features or aspects within each exemplary embodiment should typically be considered as available for other similar features or aspects in other exemplary embodiments.

While one or more exemplary embodiments have been described with reference to the figures, it will be understood by those of ordinary skill in the art that various changes in form and details may be made therein without departing from the scope as defined by the following claims.

## Claims

**1.** A three-dimensional, 3D, object recognition apparatus (1000) comprising:

a structured light generator (1200) comprising:

a light source (110) configured to emit light; and
a first meta optical device (121, MS1, 146) comprising a first metasurface (MS1) comprising nanostructures having sub-wavelength dimensions that are less than a wavelength of the light emitted from the light source;
wherein the first metasurface is configured to form a distribution of light rays from the light emitted from the light source to thereby radiate structured light;
and wherein the structured light generator is configured to radiate the structured light in a predetermined pattern toward an object;

a sensor (1400) configured to receive the structured light reflected from the object; and
a processor (1600) configured to analyze a shape or motion of the object by comparing pattern changes in the structured light radiated by the structured light generator and the structured light received by the sensor.

**2.** The 3D object recognition apparatus (1000) of claim 1, wherein the nanostructures of the first meta optical device (121, MS1, 146) have forms that are configured to realize a predetermined transmission intensity distribution and transmission phase distribution with respect to the emitted light incident thereon.

**3.** The 3D object recognition apparatus (1000) of claim 1 or 2, wherein:

the light source comprises a light exit surface through which the emitted light exits; and
the first meta optical device (121, MS1, 146) has a monolithic structure and is provided directly on the light exit surface of the light source.

**4.** The 3D object recognition apparatus (1000) of any preceding claim, wherein the nanostructures of the first meta optical device have shapes and an arrangement that are determined such that a transmission intensity distribution

and transmission phase distribution with respect to the emitted light incident thereon are repeated.

**5.** The 3D object recognition apparatus (1000) of claim 4, wherein the nanostructures of the first meta optical device have the shapes and distribution such that two transmission phase modulation values are obtained, and preferably wherein the two transmission phase modulation values are 0 and $\pi$.

**6.** The 3D object recognition apparatus (1000) of claim 4 or 5, wherein a distance d from the light source to the first metasurface (MS1) is determined such that a contrast of a structured light pattern formed by the distribution of the light rays is a maximum, and preferably wherein the distance d from the light source to the first metasurface satisfies the following condition:

$$d = m\frac{2{a_1}^2}{\lambda},$$

wherein $\lambda$ denotes the wavelength of the light emitted from the light source, $\mathbf{a_1}$ denotes a period at which a same structure is repeated in the first meta optical device, and m denotes a natural number.

**7.** The 3D object recognition apparatus (1000) of any preceding claim, further comprising a second meta optical device (123, MS2, 142) provided between the light source and the first meta optical device (121, MS1, 146), the second meta optical device comprising a second metasurface configured to adjust a beam shape of the light emitted from the light source, and preferably wherein: the first meta optical device and the second meta optical device share a supporting substrate supporting the first metasurface (MS1) and the second metasurface; and
the first metasurface and the second metasurface are respectively provided on different surfaces of the supporting substrate, the different surfaces facing each other.

**8.** The 3D object recognition apparatus (1000) of any preceding claim, further comprising a third meta optical device (135, MS3) comprising a third meta surface configured to repeatedly form the distribution of the light rays formed by the first meta optical device in a predetermined angular space, and preferably wherein the first meta optical device and the third meta optical device share a substrate supporting the first metasurface (MS1) and the third metasurface, and
the first metasurface and the third metasurface are respectively provided on opposite surfaces of the substrate, the opposite surfaces facing each other.

**9.** The 3D object recognition apparatus (1000) of any preceding claim, wherein the nanostructures have cylindrical shapes or polygonal prismatic shapes.

**10.** The 3D object recognition apparatus (1000) of any preceding claim, wherein the nanostructures have asymmetric shapes.

**11.** The 3D object recognition apparatus (1000) of any preceding claim, wherein the first meta optical device further comprises a substrate supporting the nanostructures.

**12.** The 3D object recognition apparatus (1000) of claim 11, wherein the nanostructures comprise either: a dielectric material having a refractive index greater than a refractive index of the substrate; or a conductive material.

**13.** The 3D object recognition apparatus (1000) of claim 11 or 12, wherein some nanostructures among the nanostructures comprise a dielectric material having a refractive index greater than a refractive index of the substrate, and other nanostructures among the nanostructures comprise a conductive material.

**14.** An electronic device comprising the 3D object recognition apparatus of any preceding claim.

**Patentansprüche**

**1.** Dreidimensionale, 3D-, Objekterkennungsvorrichtung (1000), umfassend:

einen strukturierten Lichtgenerator (1200), umfassend:

eine Lichtquelle (110), die dafür konfiguriert ist, Licht zu emittieren; und
ein erstes metaoptisches Gerät (121, MS1, 146) umfassend eine erste Metaoberfläche (MS1), die Nanostrukturen mit Subwellenlängedimensionen, die weniger als eine Wellenlänge des von der Lichtquelle emittierten Lichts sind, umfasst;
wobei die erste Metaoberfläche dafür konfiguriert ist, eine Verteilung von Lichtstrahlen aus dem von der Lichtquelle emittierten Licht zu bilden, um dadurch strukturiertes Licht abzustrahlen;
und wobei der strukturierte Lichtgenerator dafür konfiguriert ist, das strukturierte Licht in einem vorbestimmten Muster hin zu einem Objekt abzustrahlen;

einen Sensor (1400), der dafür konfiguriert ist, das von dem Objekt reflektierte strukturierte Licht zu empfangen; und
einen Prozessor (1600), der konfiguriert ist zum Analysieren einer Gestalt oder Bewegung des Objekts durch Vergleichen von Musteränderungen in dem von dem strukturierten Lichtgenerator abgestrahlten strukturierten Licht und dem von dem Sensor empfangenen strukturierten Licht.

**2.** 3D-Objekterkennungsvorrichtung (1000) nach Anspruch 1, wobei die Nanostrukturen des ersten metaoptischen Gerätes (121, MS1, 146) Formen aufweisen, die dafür konfiguriert sind, eine vorbestimmte Transmissionsintensitätsverteilung und Transmissionsphasenverteilung in Bezug auf das darauf einfallende emittierte Licht zu realisieren.

**3.** 3D-Objekterkennungsvorrichtung (1000) nach Anspruch 1 oder 2, wobei:
die Lichtquelle eine Lichtaustrittsfläche, durch die das emittierte Licht austritt, umfasst; und
das erste metaoptische Gerät (121, MS1, 146) eine monolithische Struktur aufweist und direkt auf der Lichtaustrittsfläche der Lichtquelle bereitgestellt ist.

**4.** 3D-Objekterkennungsvorrichtung (1000) nach einem vorhergehenden Anspruch, wobei die Nanostrukturen der ersten metaoptischen Gerätes Gestalten und eine Anordnung aufweisen, die so bestimmt sind, dass eine Transmissionsintensitätsverteilung und Transmissionsphasenverteilung in Bezug auf das darauf einfallende emittierte Licht wiederholt werden.

**5.** 3D-Objekterkennungsvorrichtung (1000) nach Anspruch 4, wobei die Nanostrukturen des ersten metaoptischen Gerätes die Gestalten und Verteilung aufweisen, so dass zwei Transmissionsphasenmodulationswerte erhalten werden, und bevorzugt, wobei die zwei Transmissionsphasenmodulationswerte 0 und $\pi$ sind.

**6.** 3D-Objekterkennungsvorrichtung (1000) nach Anspruch 4 oder 5, wobei ein Abstand d von der Lichtquelle zu der ersten Metaoberfläche (MS1) so bestimmt wird, dass ein Kontrast eines strukturierten Lichtmusters, das von der Verteilung der Lichtstrahlen gebildet wird, ein Maximum ist, und bevorzugt, wobei der Abstand d von der Lichtquelle zu der ersten Metaoberfläche die folgende Bedingung erfüllt:

$$d = m\frac{2a_1^2}{\lambda},$$

wobei $\lambda$ die Wellenlänge des von der Lichtquelle emittierten Lichts bezeichnet, $\mathbf{a_1}$ eine Periode bezeichnet, bei der eine gleiche Struktur in dem ersten metaoptischen Gerät wiederholt wird, und m eine natürliche Zahl bezeichnet.

**7.** 3D-Objekterkennungsvorrichtung (1000) nach einem vorhergehenden Anspruch, ferner umfassend ein zweites metaoptisches Gerät (123, MS2, 142), das zwischen der Lichtquelle und dem ersten metaoptischen Gerät (121, MS1, 146) bereitgestellt ist, wobei das zweite metaoptische Gerät eine zweite Metaoberfläche umfasst, die dafür konfiguriert ist, eine Strahlform des von der Lichtquelle emittierten Lichts einzustellen, und bevorzugt, wobei: sich das erste metaoptische Gerät und das zweite metaoptische Gerät ein die erste Metaoberfläche (MS1) und die zweite Metaoberfläche tragendes Trägersubstrat teilen; und
die erste Metaoberfläche und die zweite Metaoberfläche jeweils auf verschiedenen Oberflächen des Trägersubstrats bereitgestellt sind, wobei die verschiedenen Oberflächen einander zugewandt sind.

**8.** 3D-Objekterkennungsvorrichtung (1000) nach einem vorhergehenden Anspruch, ferner umfassend ein drittes metaoptisches Gerät (135, MS3), das eine dritte Metaoberfläche umfasst, die dafür konfiguriert ist, wiederholt die Verteilung der von dem ersten metaoptischen Gerät gebildeten Lichtstrahlen in einem vorbestimmten Winkelraum zu bilden, und bevorzugt, wobei sich das erste metaoptische Gerät und das dritte metaoptische Gerät ein die erste Metaoberfläche (MS1) und die dritte Metaoberfläche tragendes Substrat teilen, und
die erste Metaoberfläche und die dritte Metaoberfläche jeweils auf gegenüberliegenden Oberflächen des Substrats bereitgestellt sind, wobei die gegenüberliegenden Oberflächen einander zugewandt sind.

**9.** 3D-Objekterkennungsvorrichtung (1000) nach einem vorhergehenden Anspruch, wobei die Nanostrukturen zylindrische Formen oder polygonale prismatische Formen aufweisen.

**10.** 3D-Objekterkennungsvorrichtung (1000) nach einem vorhergehenden Anspruch, wobei die Nanostrukturen asymmetrische Formen aufweisen.

**11.** 3D-Objekterkennungsvorrichtung (1000) nach einem vorhergehenden Anspruch, wobei das erste metaoptische Gerät ferner ein die Nanostrukturen tragendes Substrat umfasst.

**12.** 3D-Objekterkennungsvorrichtung (1000) nach Anspruch 11, wobei die Nanostrukturen entweder umfassen: ein dielektrisches Material mit einem Brechungsindex, der größer ist als ein Brechungsindex des Substrats; oder ein leitfähiges Material.

**13.** 3D-Objekterkennungsvorrichtung (1000) nach Anspruch 11 oder 12, wobei einige Nanostrukturen unter den Nanostrukturen ein dielektrisches Material mit einem Brechungsindex, der größer ist als ein Brechungsindex des Substrats, umfassen und andere Nanostrukturen unter den Nanostrukturen ein leitfähiges Material umfassen.

**14.** Elektronisches Gerät, umfassend die 3D-Objekterkennungsvorrichtung nach einem vorhergehenden Anspruch.

## Revendications

**1.** Appareil de reconnaissance d'objets tridimensionnel, 3D (1000) comprenant :
un générateur de lumière structurée (1200) comprenant :

une source de lumière (110) conçue pour émettre une lumière ; et
un premier dispositif méta-optique (121, MS1, 146) comprenant une première métasurface (MS1) comprenant des nanostructures présentant des dimensions de sous-longueur d'onde qui sont inférieures à une longueur d'onde de la lumière émise par la source de lumière ;
ladite première métasurface étant conçue pour former une distribution de rayons de lumière à partir de la lumière émise par la source de lumière pour rayonner ainsi une lumière structurée ;
et ledit générateur de lumière structurée étant conçu pour rayonner la lumière structurée selon un motif prédéfini vers un objet ;
un capteur (1400) conçu pour recevoir la lumière structurée réfléchie par l'objet ; et
un processeur (1600) conçu pour analyser une forme ou un mouvement de l'objet en comparant des changements de motif dans la lumière structurée rayonnée par le générateur de lumière structurée et la lumière structurée reçue par le capteur.

**2.** Appareil de reconnaissance d'objets 3D (1000) selon la revendication 1, lesdites nanostructures du premier dispositif méta-optique (121, MS1, 146) possédant des formes qui sont conçues pour réaliser une distribution d'intensité de transmission et une distribution de phase de transmission prédéfinies par rapport à la lumière émise incidente sur celles-ci.

**3.** Appareil de reconnaissance d'objets 3D (1000) selon la revendication 1 ou 2,

ladite source de lumière comprenant une surface de sortie de lumière par laquelle sort la lumière émise ; et
ledit premier dispositif méta-optique (121, MS1, 146) possédant une structure monolithique et étant disposé directement sur la surface de sortie de lumière de la source de lumière.

**4.** Appareil de reconnaissance d'objets 3D (1000) selon une quelconque revendication précédente, lesdites nanostructures du premier dispositif méta-optique possédant des formes et un agencement qui sont déterminés de sorte

qu'une distribution d'intensité de transmission et une distribution de phase de transmission par rapport à la lumière émise incidente sur celles-ci soient répétées.

**5.** Appareil de reconnaissance d'objets 3D (1000) selon la revendication 4, lesdites nanostructures du premier dispositif méta-optique possédant des formes et une distribution de sorte que deux valeurs de modulation de phase de transmission soient obtenues, et de préférence lesdites deux valeurs de modulation de phase de transmission étant 0 et $\pi$.

**6.** Appareil de reconnaissance d'objets 3D (1000) selon la revendication 4 ou 5, une distance **d** de la source de lumière à la première métasurface (MS1) étant déterminée de sorte qu'un contraste d'un motif de lumière structurée formé par la distribution de rayons de lumière soit un maximum, et de préférence ladite distance **d** de la source de lumière à la première métasurface satisfaisant la condition suivante :

$$d = m\frac{2a_1^2}{\lambda},$$

$\lambda$ désignant la longueur d'onde de la lumière émise par la source de lumière, $\mathbf{a_1}$ désignant une période à laquelle une même structure est répétée dans le premier dispositif méta-optique, et **m** désignant un nombre naturel.

**7.** Appareil de reconnaissance d'objets 3D (1000) selon une quelconque revendication précédente, comprenant en outre un deuxième dispositif méta-optique (123, MS2, 142) disposé entre la source de lumière et le premier dispositif méta-optique (121, MS1, 146), le deuxième dispositif méta-optique comprenant une deuxième métasurface conçue pour régler une forme de faisceau de la lumière émise par la source de lumière, et de préférence : ledit premier dispositif méta-optique et ledit deuxième dispositif méta-optique partageant un substrat de support supportant la première métasurface (MS1) et la deuxième métasurface ; et
ladite première métasurface et ladite deuxième métasurface étant respectivement disposées sur des surfaces différentes du substrat de support, les différentes surfaces se faisant face.

**8.** Appareil de reconnaissance d'objets 3D (1000) selon une quelconque revendication précédente, comprenant en outre un troisième dispositif méta-optique (135, MS3) comprenant une troisième métasurface conçue pour former de manière répétée la distribution des rayons de lumière formés par le premier dispositif méta-optique dans un espace angulaire prédéfini, et de préférence ledit premier dispositif méta-optique et ledit troisième dispositif méta-optique partageant un substrat supportant la première métasurface (MS1) et la troisième métasurface, et
ladite première métasurface et ladite troisième métasurface étant respectivement disposées sur des surfaces opposées du substrat, les surfaces opposées se faisant face.

**9.** Appareil de reconnaissance d'objets 3D (1000) selon une quelconque revendication précédente, lesdites nanostructures possédant des formes cylindriques ou des formes prismatiques polygonales.

**10.** Appareil de reconnaissance d'objets 3D (1000) selon une quelconque revendication précédente, lesdites nanostructures possédant des formes asymétriques.

**11.** Appareil de reconnaissance d'objets 3D (1000) selon une quelconque revendication précédente, ledit premier dispositif méta-optique comprenant en outre un substrat supportant les nanostructures.

**12.** Appareil de reconnaissance d'objets 3D (1000) selon la revendication 11, lesdites nanostructures comprenant soit : un matériau diélectrique possédant un indice de réfraction supérieur à un indice de réfraction du substrat ; soit un matériau conducteur.

**13.** Appareil de reconnaissance d'objets 3D (1000) selon la revendication 11 ou 12, certaines nanostructures parmi les nanostructures comprenant un matériau diélectrique possédant un indice de réfraction supérieur à un indice de réfraction du substrat, et d'autres nanostructures parmi les nanostructures comprenant un matériau conducteur.

**14.** Dispositif électronique comprenant l'appareil de reconnaissance d'objets 3D selon une quelconque revendication précédente.

FIG. 1

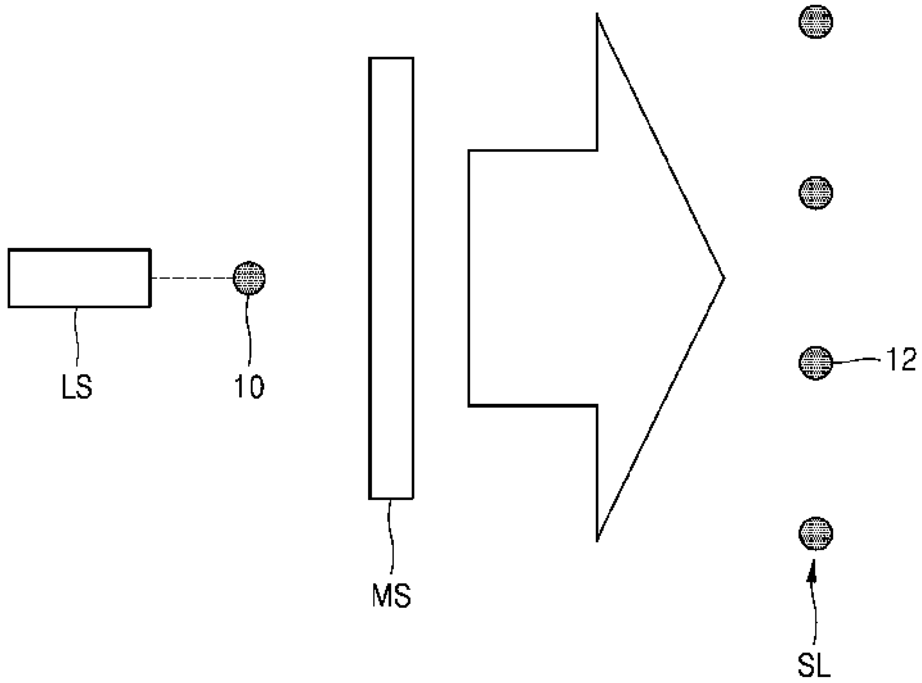

FIG. 2

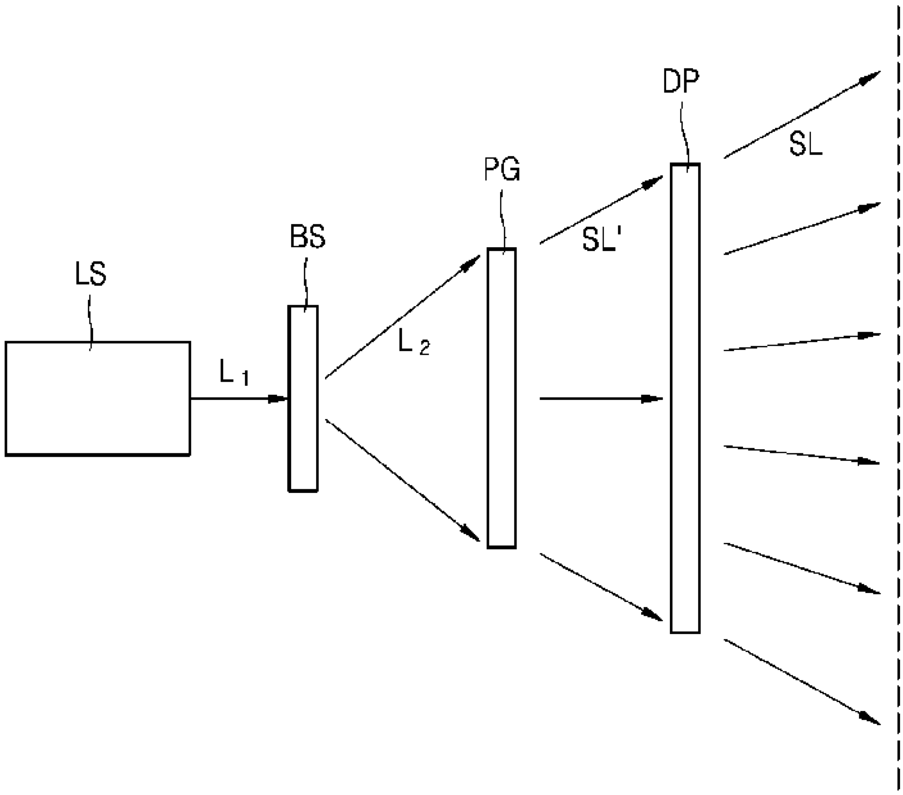

FIG. 3

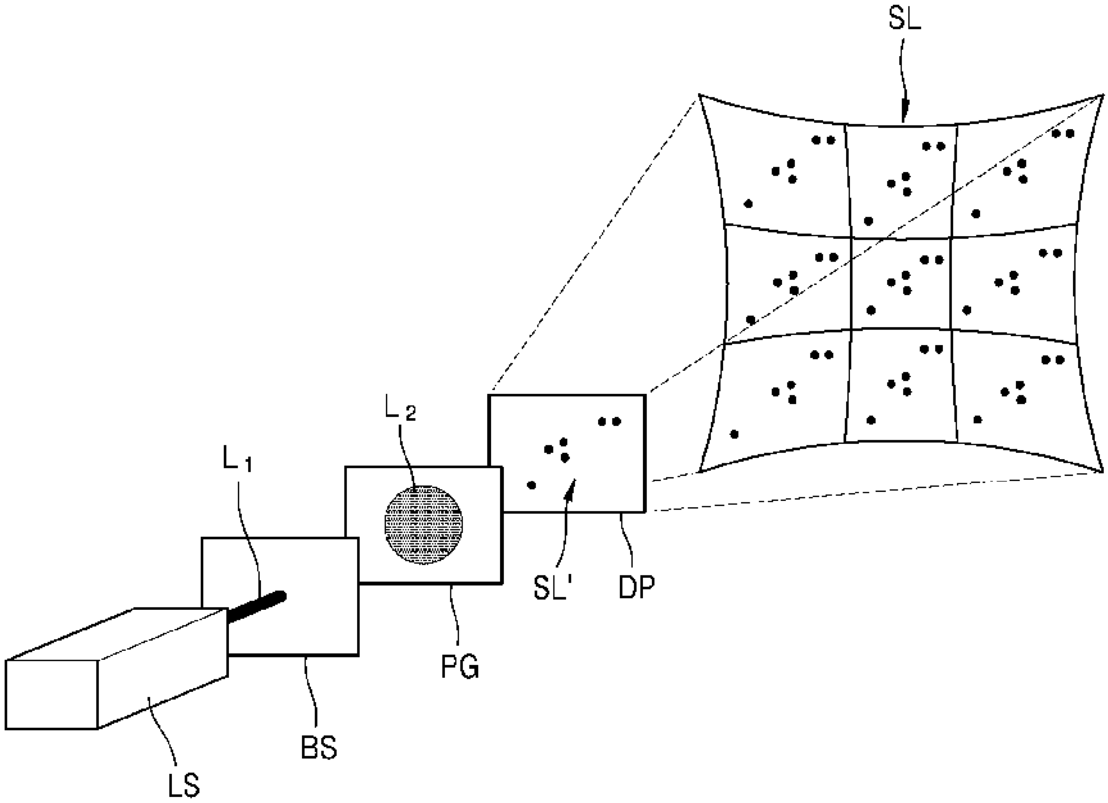


FIG. 4

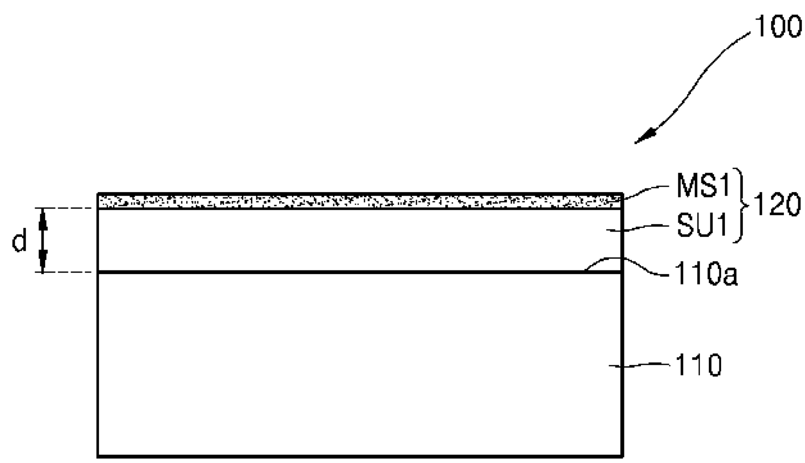

FIG. 5

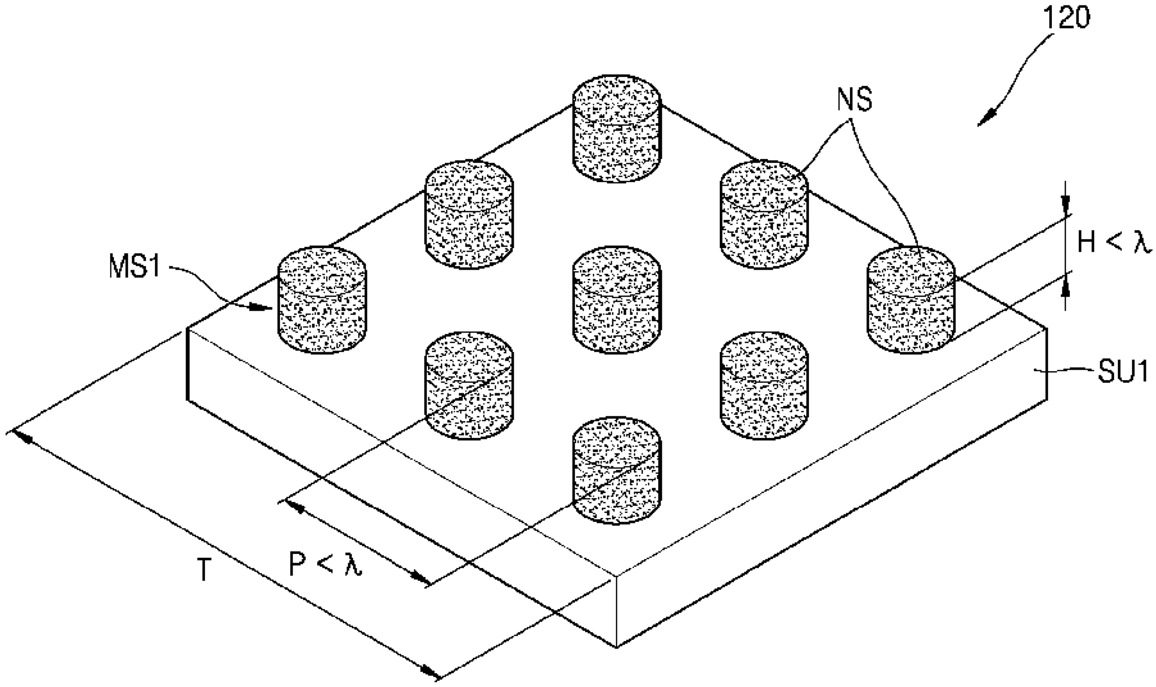


FIG. 6

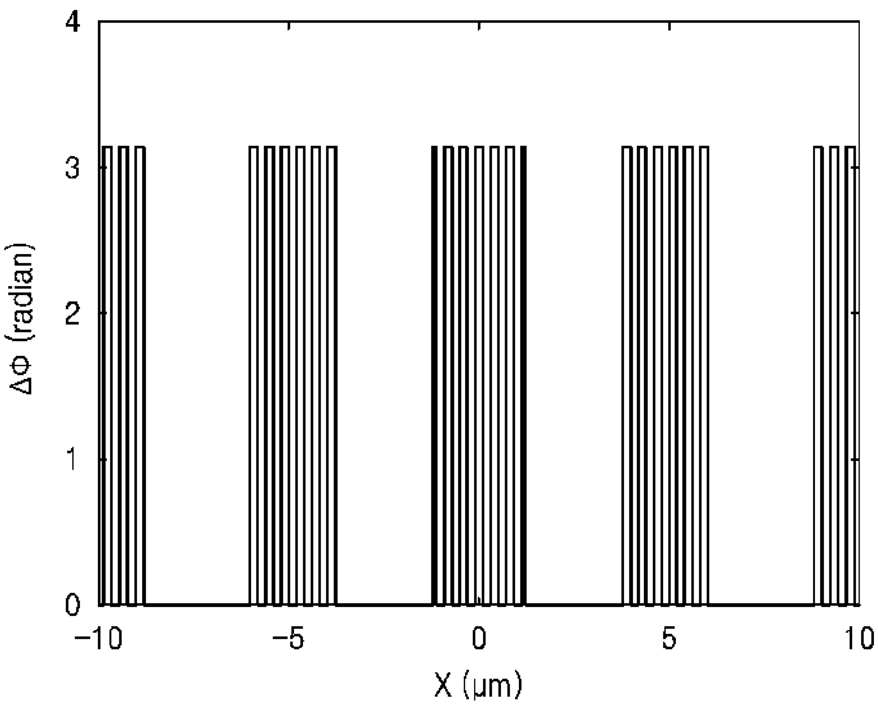

FIG. 7

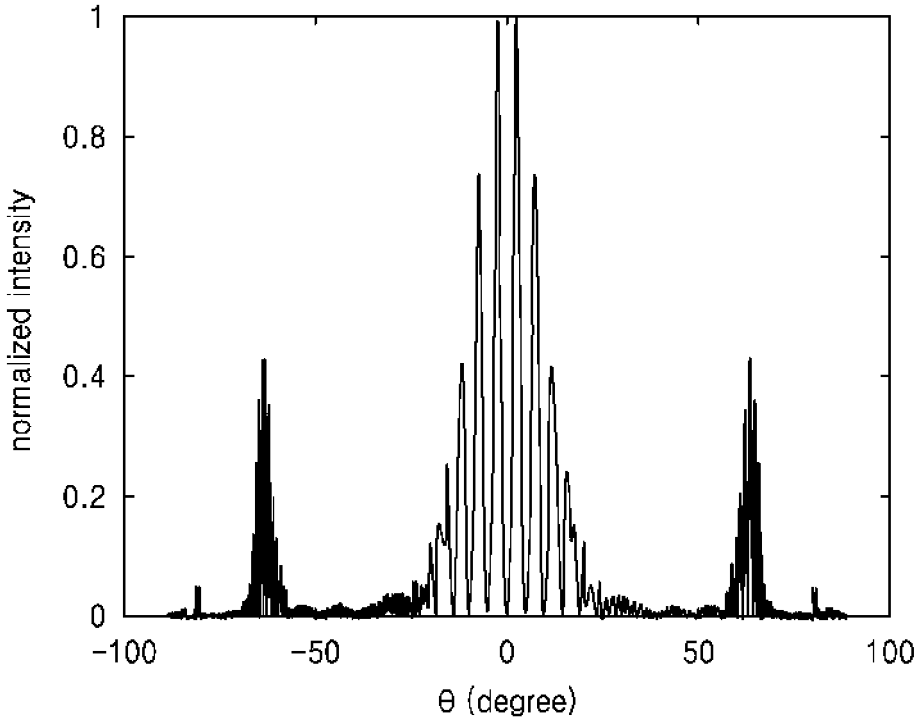
1
0.8
0.6
0.4
0.2
0
normalized intensity
−100
−50
0
50
100
θ (degree)

FIG. 8

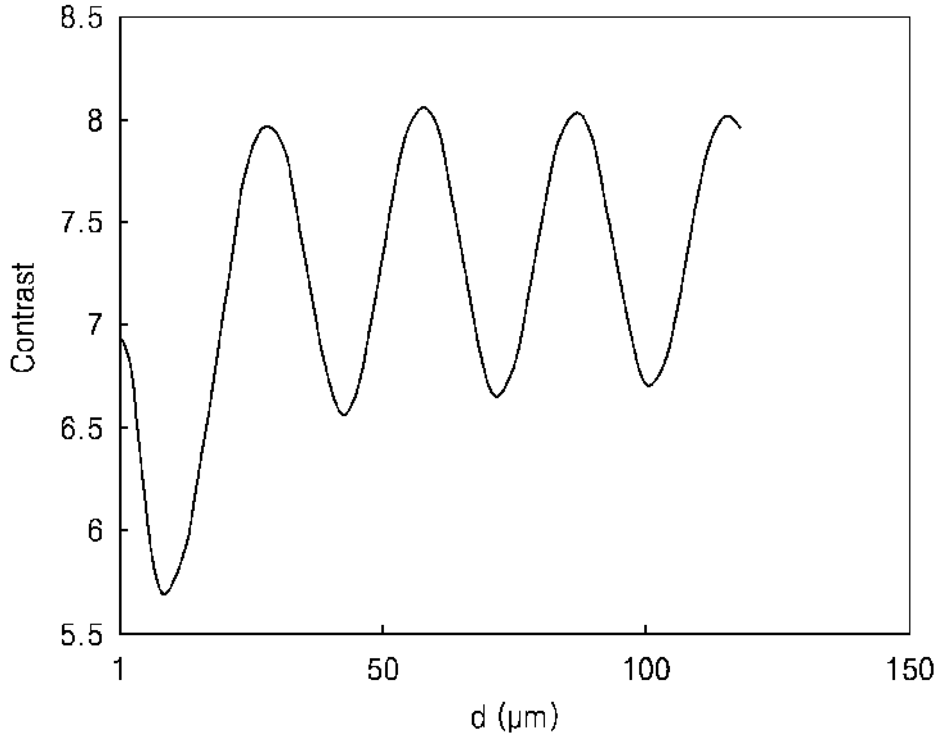
8.5
8
7.5
7
6.5
6
5.5
Contrast
1
50
100
150
d (μm)

FIG. 9

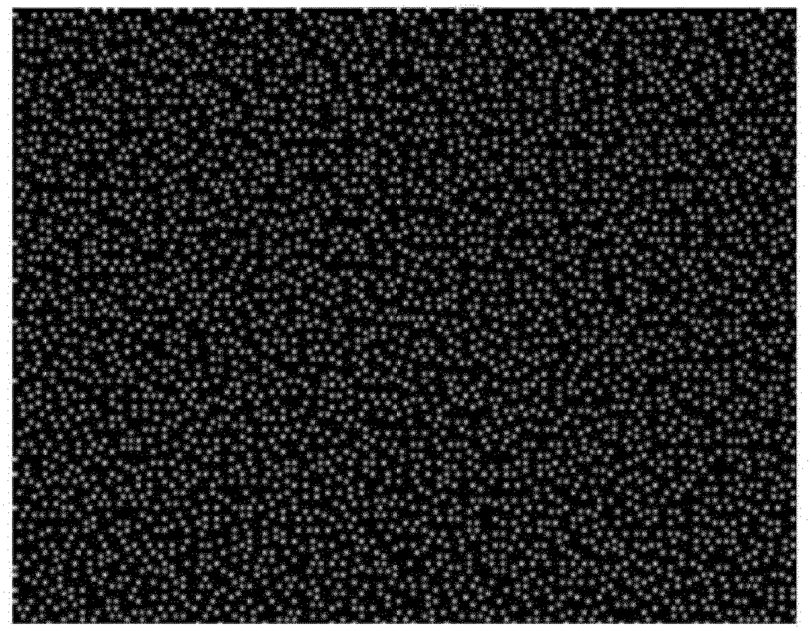

FIG. 10

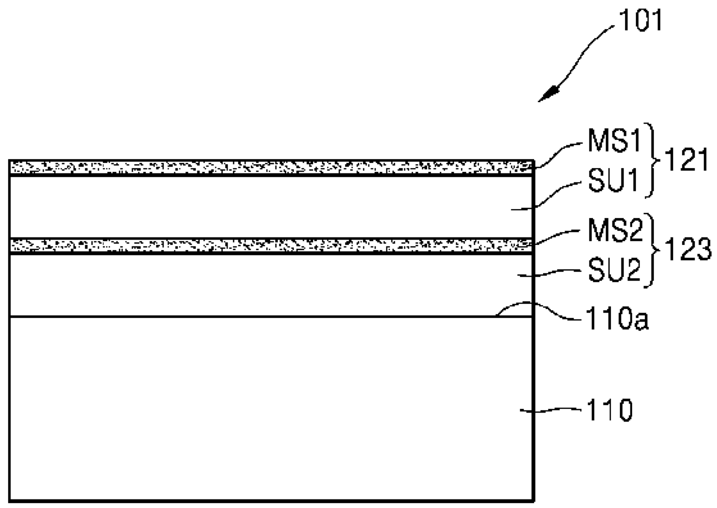
101
MS1
121
SU1
MS2
123
SU2
110a
110

FIG. 11

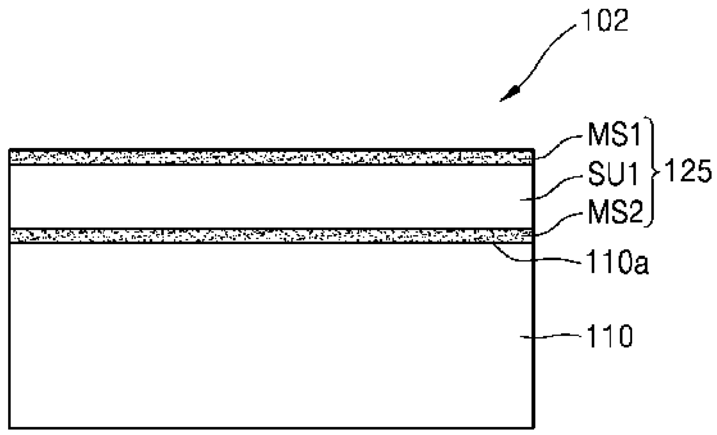
102
MS1
SU1
125
MS2
110a
110

FIG. 12

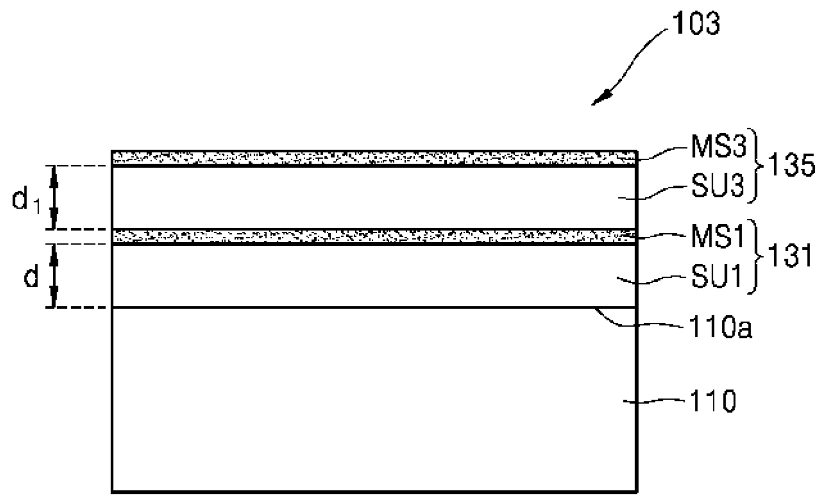
103
MS3
SU3
135
MS1
SU1
131
110a
110
$d_1$
d

FIG. 13

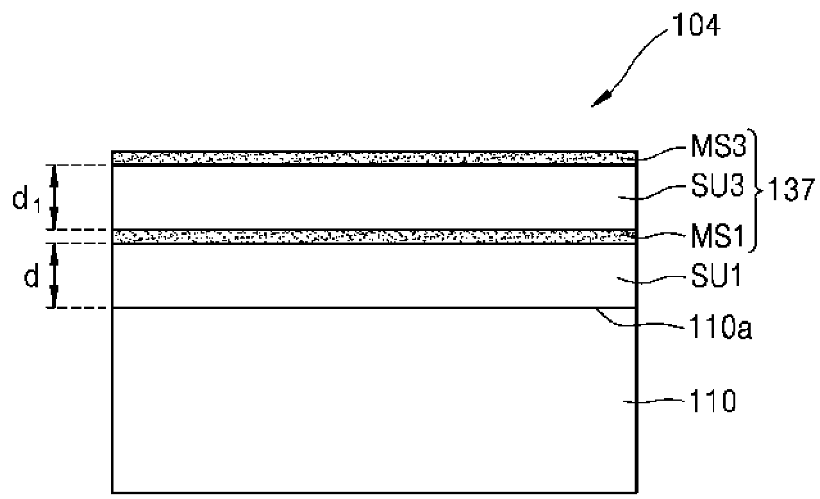
104
MS3
SU3
137
MS1
SU1
110a
110
$d_1$
d

FIG. 14

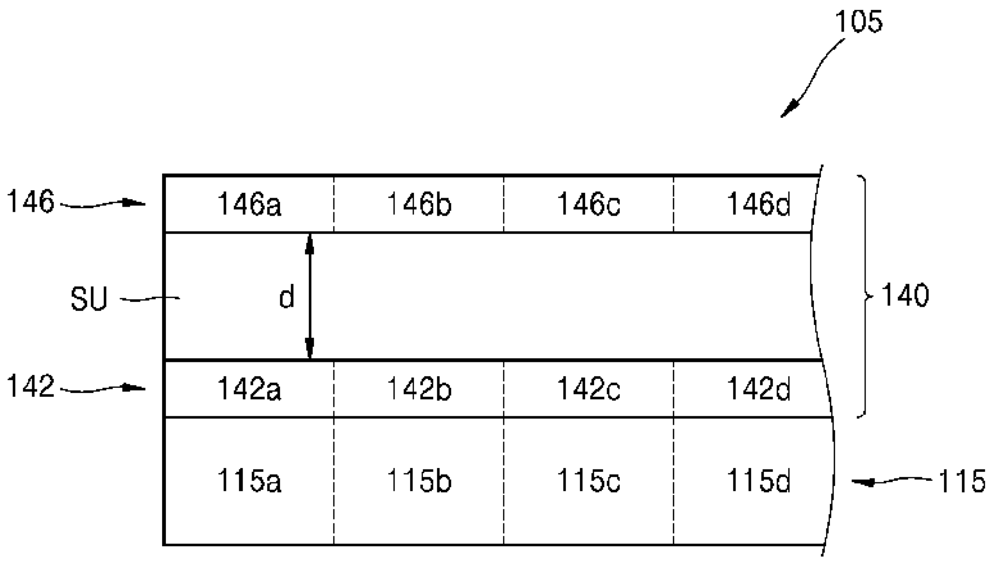
105
146
146a
146b
146c
146d
SU
d
140
142
142a
142b
142c
142d
115a
115b
115c
115d
115

FIG. 15

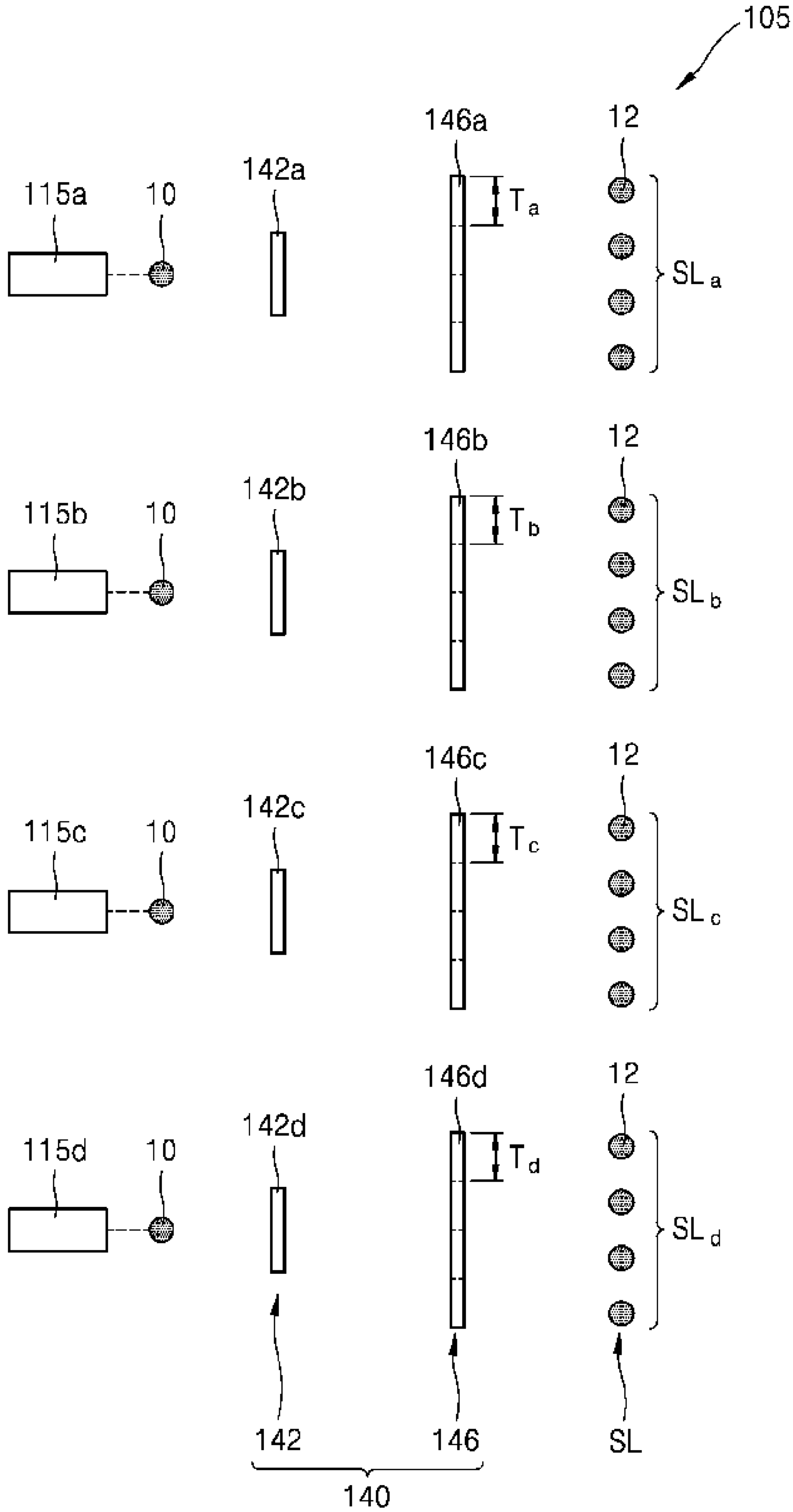
105
146a
12
142a
115a
10
$T_a$
$SL_a$
146b
12
142b
115b
10
$T_b$
$SL_b$
146c
12
142c
115c
10
$T_c$
$SL_c$
146d
12
142d
115d
10
$T_d$
$SL_d$
142
146
SL
140

FIG. 16

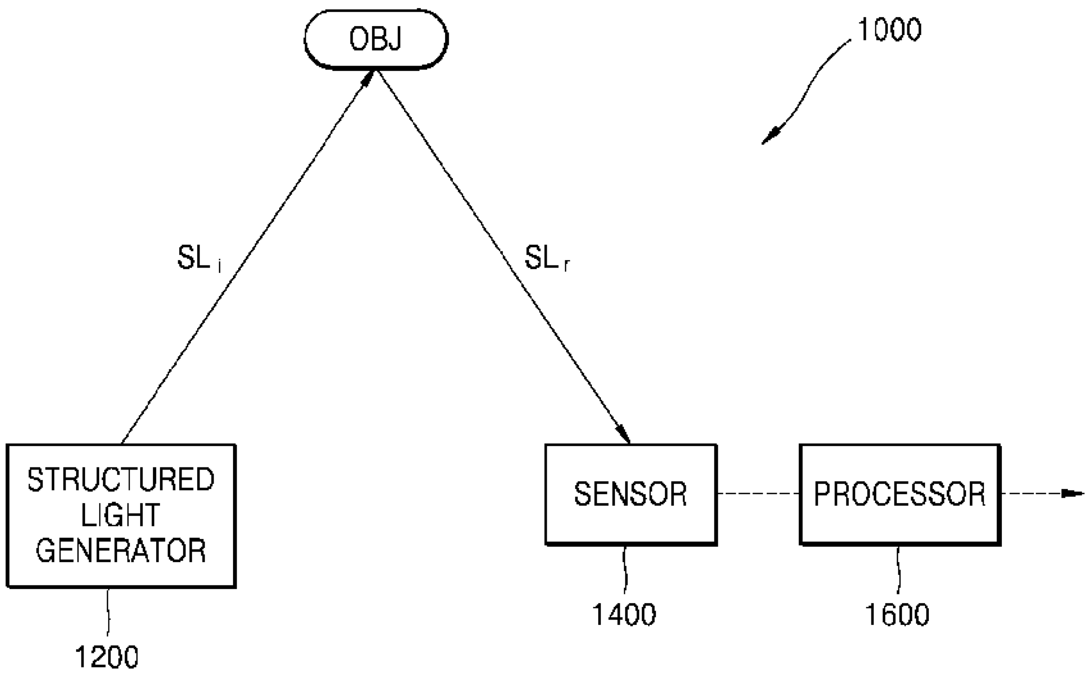
OBJ
1000
SL i
SL r
STRUCTURED LIGHT GENERATOR
SENSOR
PROCESSOR
1200
1400
1600

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 2011180779 A
- FR 3007148 A
- EP 2831538 A
- WO 2015054601 A

### Non-patent literature cited in the description

- **JINWEI ZENG et al.** Manipulating Complex Light with Metamaterials. *SCIENTIFIC REPORTS,* 02 October 2013, vol. 3 (1